# EUROPÄISCHE PATENTSCHRIFT

(11) **EP 3 359 322 B1**
(45) Veröffentlichungstag und Bekanntmachung des Hinweises auf die Patenterteilung: **10.07.2019**
(21) Anmeldenummer: 16775063.7
(22) Anmeldetag: 31.08.2016
(51) Int. Cl.: B23B 51/00, B23B 51/06

(54) **BOHRWERKZEUG**
DRILLING TOOL
OUTIL DE PERÇAGE

(30) Priorität: 06.10.2015 AT 29415 U
(43) Veröffentlichungstag der Anmeldung: 15.08.2018
(73) Patentinhaber: Ceratizit Austria Gesellschaft m.b.H., 6600 Reutte (AT); Günther Wirth Hartmetallwerkzeuge GmbH & Co. KG, 88481 Balzheim (DE)
(72) Erfinder: BAUR, Steffen, 88484 Balzheim (DE); VOGT, Reinhold, 88484 Balzheim (DE); KASSNER, Sebastian, 6600 Reutte (AT); MERKLE, Uli, 6600 Reutte (AT)
(74) Vertreter: Ciesla, Dirk
(86) Internationale Anmeldenummer: PCT/AT2016/000080
(87) Internationale Veröffentlichungsnummer: WO 2017/059466

(56) Entgegenhaltungen:
- WO-A1-2013/142885
- WO-A1-2015/075127
- DE-A1-102011 001 824
- DE-A1-102013 105 015
- DE-U1-202011 100 380
- US-A1- 2012 195 704
- US-A1- 2012 201 618

## Beschreibung

Die vorliegende Erfindung betrifft ein Bohrwerkzeug gemäß dem Oberbegriff des Patentanspruchs 1 zum spanabhebenden Erzeugen einer Bohrung in einem Werkstück, insbesondere für langspanende Werkstoffe, Leicht- und Buntmetalle.

Ein derartiges Bohrwerkzaug geht beispielsweise aus der DE 10 2013 105015 A1 hervor.

Es ist bekannt, zum Ausbilden von Bohrungen in langspanenden Werkstoffen, wie insbesondere Aluminium oder Aluminiumlegierungen, Bohrwerkzeuge einzusetzen, die mit einer Mehrzahl von Schneiden aus Ultrahartwerkstoff versehen sind. Unter Ultrahartwerkstoff ist dabei ein Werkstoff zu verstehen, der eine noch größere Härte als z.B. Hartmetall (cemented carbide) aufweist. Typische Ultrahartwerkstoffe sind z.B. polykristalliner Diamant (PKD), kubisches Bornitrid (CBN), CVD-Diamant oder Keramik. Das Bohrwerkzeug kann dabei z.B. zum Bohren ins Vollmaterial ausgebildet sein, d.h. auch mit einer Zentrumsschneide versehen sein, oder aber zum Aufbohren einer bereits existierenden Bohrung ausgebildet sein. Zum Erzeugen von komplexeren gestuften Bohrungsgeometrien ist es dabei insbesondere bekannt, sogenannte Stufenbohrer einzusetzen, die mehrere Gruppen von Schneiden zum Erzeugen von unterschiedlichen Bohrungsdurchmessern und/oder Ansenkungen aufweisen. Die Gruppen von Schneiden sind in diesem Fall insbesondere über die Längsachse eines Grundkörpers des Bohrwerkzeugs verteilt angeordnet, um die gewünschte Bohrungsgeometrie zu erzielen.

Derartige Bohrwerkzeuge kommen z.B. zum Ausbilden von Befestigungsbohrungen in Aluminiumfelgen für Fahrzeuge zum Einsatz.

Es ist Aufgabe der vorliegenden Erfindung, ein verbessertes Bohrwerkzeug bereitzustellen, das einen besonders schnellen und vibrationsarmen Zerspanungsprozess ermöglicht, bei dem die erzeugten Späne des bearbeiteten Werkstoffes zuverlässig abtransportiert werden.

Die Aufgabe wird durch ein Bohrwerkzeug zum Erzeugen einer Bohrung in einem Werkstück nach Anspruch 1 gelöst.

Das Bohrwerkzeug weist einen Grundkörper und zumindest eine erste Mehrzahl von Schneiden aus Ultrahartwerkstoff auf, die zur Ausbildung eines vorgegebenen ersten Bohrungsdurchmessers über den Umfang des Grundkörpers verteilt an zugeordneten Sitzen befestigt sind. Die Schneiden sind in ungleichmäßigen Winkelabständen über den Umfang des Bohrwerkzeugs verteilt und weisen jeweils zumindest eine Schneidkante und zumindest eine spanflächenseitig in den Ultrahartwerkstoff eingebrachte, als Vertiefung in dem Ultrahartwerkstoff ausgebildete Spanleitstufe auf.

Durch die Kombination der ungleichmäßigen Verteilung der Schneiden zur Ausbildung des ersten Bohrungsdurchmessers, d.h. der Schneiden einer ersten Gruppe von Schneiden, mit den spanflächenseitig in dem Ultrahartwerkstoff der Schneiden ausgebildeten Spanleitstufen wird ein besonders schneller und vibrationsarmer Zerspanungsprozess ermöglicht, bei dem die erzeugten Späne zuverlässig abgeführt werden. Die Schneiden können dabei zur Erzeugung einer achsparallelen Bohrungswand eine sich senkrecht zu der Längsachse des Bohrwerkzeuges erstreckende Schneidkante, zur Erzeugung von Ansenkungen bzw. schrägen Bohrungswänden oder Stufen eine sich schräg oder quer zur Längsachse erstreckende Schneidkante oder aber z.B. auch sowohl parallel zur Längsachse als auch schräg oder quer zur Längsachse verlaufende Schneidkantenabschnitte aufweisen. Ferner ist es z.B. auch möglich gekrümmte Schneidkantenabschnitte zum Erzeugen von gerundeten Bohrungswänden vorzusehen. Eine besonders gute Vibrationsdämpfung in Verbindung mit einem schnellen Zerspanungsprozess werden insbesondere dann erreicht, wenn das Bohrwerkzeug zumindest drei-schneidig ausgebildet ist, d.h. die erste Gruppe von Schneiden zumindest drei individuelle Schneiden über den Umfang des Bohrwerkzeugs verteilt aufweist. Es ist jedoch eine Ausgestaltung mit nur zwei Schneiden pro Gruppe von Schneiden möglich. Insbesondere kann das Bohrwerkzeug als Stufenbohrer bzw. Stufensenker mit mehreren Gruppen von Schneiden realisiert werden. Die Schneiden können z.B. vollständig aus dem Ultrahartwerkstoff bestehen oder aber z.B. auch einen mehrlagigen Aufbau aufweisen, bei dem nur die Schneidkante und die Spanfläche aus Ultrahartwerkstoff gebildet sind, der auf einem Trägermaterial wie z.B. insbesondere Hartmetall aufgebracht ist.

Gemäß einer Weiterbildung sind die Schneiden aus Ultrahartwerkstoff stoffschlüssig an den zugeordneten Sitzen befestigt. In diesem Fall wird eine besonders kompakte und präzise Anordnung der Schneiden erreicht, die auch bei einer Ausbildung des Bohrwerkzeugs als Dreischneider mit Gruppen von jeweils drei Schneiden für einen vorgegebenen Bohrungsdurchmesser einen ausreichenden Raum für die Abführung der erzeugten Späne zur Verfügung stellt.

Gemäß einer Weiterbildung ist der Grundkörper mit Kühlmittelaustritten versehen, die den Schneiden zugeordnet sind. In diesem Fall können die Schneiden zuverlässig gekühlt werden, sodass eine schnelle und verschleißarme Zerspanung ermöglicht ist.

Gemäß einer Weiterbildung weist das Bohrwerkzeug ein erstes Ende zum Verbinden mit einer Werkzeugaufnahme und ein freies zweites Ende auf und zumindest einer der Kühlmittelaustritte ist derart ausgebildet, dass Kühlmittel mit einer in Richtung des ersten Endes gerichteten Strömungskomponente aus dem Kühlmittelaustritt austritt. In diesem Fall können die erzeugten Späne durch das austretende Kühlmittel unterstützt besonders zuverlässig abgeführt werden. Eine besonders gute Spanausbringung kann in Kombination mit polierten Spannuten in dem Grundkörper erzielt werden.

Gemäß einer Weiterbildung weist die erste Mehrzahl von Schneiden zumindest drei über den Umfang des Grundkörpers verteilte Schneiden auf. Mit anderen Worten ist das Bohrwerkzeug in diesem Fall mindestens als sogenannter Drei-Schneider ausgebildet. Insbesondere aufgrund der Kombination mit der ungleichmäßigen Verteilung der Schneiden über den Außenumfang des Grundkörpers wird in diesem Fall eine besonders schnelle und vibrationsarme Zerspanung ermöglicht. Ferner kann in diesem Fall auf zusätzliche verschleißanfällige Führungsflächen zur Führung des Bohrwerkzeugs in der Bohrung verzichtet werden.

Gemäß einer Weiterbildung ist die Spanleitstufe durch Laserbearbeitung oder Elektroerodieren in dem Ultrahartwerkstoff ausgebildet. In diesem Fall kann die Spanleitstufe in besonders einfacher und zuverlässiger Weise in dem Ultrahartwerkstoff ausgebildet werden. Die Spanleitstufe kann jedoch z.B. auch durch Direktpressen bei der Herstellung des Ultrahartwerkstoffs in dem Ultrahartwerkstoff ausgebildet werden. Bevorzugt erstreckt sich die Spanleitstufe dabei jeweils überwiegend entlang der zugehörigen Schneidkante und folgt dem Verlauf der Schneidkante.

Gemäß einer Weiterbildung weist der Ultrahartwerkstoff PKD (polykristallinen Diamant) oder CBN (kubisches Bornitrid) auf. Der Ultrahartwerkstoff kann dabei insbesondere aus PKD oder CBN bestehen. Speziell mit einem solchen Ultrahartwerkstoff kann insbesondere ein Werkstück aus einem langspanenden Material, wie z.B. Aluminium oder einer Aluminiumlegierung, zuverlässig und schnell bearbeitet werden.

Gemäß einer Weiterbildung ist das Bohrwerkzeug als Stufenbohrer mit mehreren Gruppen von Schneiden zum Erzeugen verschiedener Bohrungsdurchmesser ausgebildet, die an voneinander verschiedenen axialen Positionen entlang einer Längsachse des Grundkörpers angeordnet sind. In diesem Fall ist eine besonders schnelle Erzeugung einer komplexen Bohrungsgeometrie ermöglicht. Die Gruppen von Schneiden können dabei jeweils sich parallel zur Längsachse erstreckende Schneidenbereiche für achsparallele Bohrungswände und/oder schräg oder quer zur Längsachse verlaufende Schneidenbereiche für schräge Bohrungswände bzw. Ansenkungen oder Stufen aufweisen. Ferner können auch gekrümmte Schneidenbereiche zum Erzeugen gekrümmter Bohrungswände vorgesehen werden. Bevorzugt weist das Bohrwerkzeug dabei zumindest eine erste Mehrzahl von Schneiden zur Ausbildung eines ersten Bohrungsdurchmessers und zumindest eine zweite Mehrzahl von Schneiden zur Ausbildung eines größeren, zweiten Bohrungsdurchmessers auf. Es können jedoch insbesondere auch noch weitere Gruppen von Schneiden vorgesehen sein. Ferner können z.B. zum Bohren ins Vollmaterial auch eine oder mehrere Zentrumsschneiden vorgesehen sein.

Gemäß einer Weiterbildung weisen die erste Mehrzahl von Schneiden und die zweite Mehrzahl von Schneiden jeweils zumindest drei Schneiden auf. In diesem Fall kann die gewünschte Bohrungsgeometrie besonders schnell und vibrationsarm erzeugt werden und es kann auf zusätzliche Führungsflächen für eine Führung des Bohrwerkzeugs in der Bohrung verzichtet werden.

Gemäß einer Weiterbildung sind die Schneiden der zweiten Mehrzahl von Schneiden gegenüber den Schneiden der ersten Mehrzahl von Schneiden bezüglich einer Rotationsrichtung in Umfangsrichtung nach rückwärts versetzt angeordnet. In diesem Fall können Vibrationen noch zuverlässiger unterdrückt werden, es wird eine verbesserte Abstützung des Bohrwerkzeugs bereitgestellt und insbesondere wird auch bei im Wesentlichen parallel zur Längsachse verlaufenden Spanräumen eine besonders zuverlässige Spanabfuhr erreicht.

Gemäß einer Weiterbildung sind die Schneiden der zweiten Mehrzahl von Schneiden jeweils um einen Winkel im Bereich 3° bis 30° zu den Schneiden der ersten Mehrzahl von Schneiden versetzt angeordnet sind, bevorzugt im Bereich 7° bis 20°. Insbesondere in diesem Winkelbereich werden gleichzeitig eine gute Vibrationsreduzierung und eine gute Spankontrolle erreicht.

Gemäß einer Weiterbildung weist das Bohrwerkzeug Schneidenbereiche zum Ausbilden von parallel zu einer Längsachse der Bohrung verlaufenden Bohrungswänden und Schneidenbereiche zum Ausbilden von schräg zu der Längsachse der Bohrung verlaufenden Bohrungswänden auf. In diesem Fall ist das Ausbilden auch komplexer Bohrungsgeometrien zuverlässig ermöglicht, insbesondere können sowohl zylindrische Bohrungsabschnitte als auch Ansenkungen gleichzeitig ausgebildet werden. Die parallelen und schrägen Schneidenbereiche können dabei bei verschiedenen Schneiden oder aber auch bei denselben Schneiden realisiert sein. Ferner können auch gekrümmte Schneidenbereiche vorgesehen sein.

Gemäß einer Weiterbildung ist das Bohrwerkzeug zum Bohren ins Volle ausgebildet und weist zumindest eine sich zumindest bis zur Längsachse erstreckende Stirnschneide auf. In diesem Fall kann eine Bohrung mit einer komplexen Bohrungsgeometrie ohne Vorbearbeitung in dem Werkstück ausgebildet werden.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Darstellung eines Bohrwerkzeugs gemäß einer Ausführungsform;
- Fig. 2:: eine schematische Seitenansicht des Bohrwerkzeuges gemäß der Ausführungsform;
- Fig. 3:: eine vergrößerte Detaildarstellung im Bereich eines freien Endes des Bohrwerkzeugs von Fig. 2;
- Fig. 4:: eine schematische Aufsicht auf das freie Ende des Bohrwerkzeugs, und
- Fig. 5:: eine schematische Schnittdarstellung in einer Ebene, die die Längsachse des Bohrwerkzeugs erhält.

### AUSFÜHRUNGSFORM

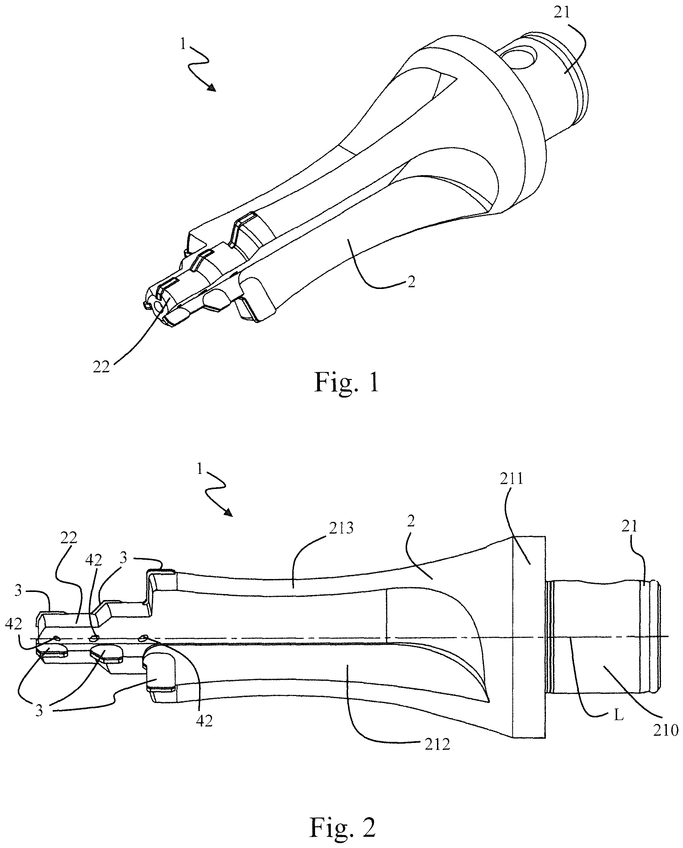

Eine Ausführungsform eines Bohrwerkzeugs 1 wird im Folgenden unter Bezugnahme auf die Fig. 1 bis Fig. 5 eingehender beschrieben. Bei dem konkret in den Figuren dargestellten Ausführungsbeispiel ist das Bohrwerkzeug 1 insbesondere als Stufen-Bohrer zum Ausbilden einer Bohrung mit einer komplexen Geometrie in einem Werkstück aus insbesondere einem langspanenden Material ausgebildet.

Das Bohrwerkzeug 1 weist einen Grundkörper 2 mit einem ersten Ende 21 zum Verbinden mit einer (nicht dargestellten) Werkzeugaufnahme und einem freien zweiten Ende 22 auf. Der Grundkörper kann z.B. aus Werkzeugstahl, Hartmetall (cemented carbide), Cermet, Densimet® oder Ähnlichem gebildet sein und weist eine Längsachse L auf. Bei der dargestellten Ausführungsform weist das erste Ende 21 einen im Wesentlichen zylindrischen ersten Abschnitt 210 und einen sich daran in Richtung des zweiten Endes 22 anschließenden verbreiterten Bund 211 zum Abstützen auf. In Richtung des zweiten Endes 22 schließt sich an den verbreiterten Bund 211 ein mit Spannuten 212 versehener Schaftabschnitt 213 an. Obwohl sich die Spannuten 212 bei der dargestellten Ausführungsform im Wesentlichen parallel zu der Längsachse L erstrecken, ist es z.B. gemäß einer Abwandlung auch möglich, die Spannuten spiralförmig um die Längsachse L verlaufend auszubilden. Um eine optimale Abführung von Spänen zu erzielen, kann der Grundkörper 2 im Bereich der Spannuten 212 bevorzugt poliert sein.

In Richtung des freien zweiten Endes 22 verjüngt sich der Querschnitt des Grundkörpers 2 stufenartig, wie insbesondere in Fig. 2 zu sehen ist. Obwohl sich der Grundkörper 2 bei der konkret dargestellten Ausführungsform in zwei Stufen verjüngt, ist es insbesondere z.B. auch möglich, mehr solche Stufen vorzusehen, wenn es die gewünschte zu erzeugende Bohrungsgeometrie erfordert.

Im Bereich der stufenförmigen Verjüngung des Schaftabschnittes 213 ist eine Mehrzahl von Sitzen für Schneiden 3 an dem Grundkörper 2 ausgebildet. In diesen Sitzen sind jeweils Schneiden 3 aus Ultrahartwerkstoff stoffschlüssig an dem Grundkörper 2 befestigt. Die Schneiden 3 können dabei z.B. vollständig aus Ultrahartwerkstoff, wie insbesondere PKD, CBN oder CVD-Diamant, bestehen oder aber, wie bei der dargestellten Ausführungsform, einen mehrlagigen Aufbau aufweisen, bei dem der Bereich 31 der Schneidkanten und Spanflächen durch Ultrahartwerkstoff gebildet ist, der auf einem Trägermaterial 32 aufgebracht ist. Bei dem dargestellten Ausführungsbeispiel ist das Trägermaterial 32 z.B. Hartmetall, das z.B. durch Löten stoffschlüssig mit dem Grundkörper 2 verbunden ist. Die Sitze in dem Grundkörper 2 und die daran befestigten Schneiden 3 sind derart angeordnet, dass erzeugte Späne des bearbeiteten Werkstücks über die Spannuten 212 in Richtung des ersten Endes 21 des Bohrwerkzeugs 1 abgeführt werden.

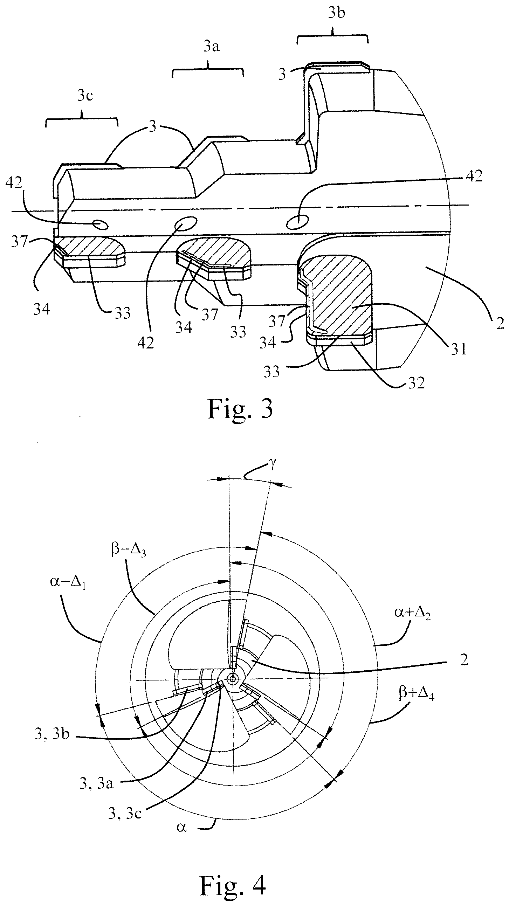

Wie insbesondere in den Fig. 2 und Fig. 3 zu sehen ist, weist das Bohrwerkzeug 1 mehrere Gruppen von Schneiden 3 auf, die an voneinander verschiedenen Positionen entlang der Längsachse L des Grundkörpers 2 angeordnet sind. Bei dem konkret dargestellten Ausführungsbeispiel sind insgesamt drei solche Gruppen von Schneiden 3 zur Bearbeitung von Bohrungswänden mit unterschiedlichen Durchmessern vorgesehen. Es ist jedoch z.B. auch möglich, mehr oder weniger solcher Gruppen von Schneiden 3 vorzusehen. Bei der Ausführungsform ist eine erste Mehrzahl 3a von Schneiden 3 (d.h. eine erste Gruppe von Schneiden 3) zum Erzeugen eines ersten Bohrungsdurchmessers vorgesehen und weiter in Richtung des ersten Endes 21 des Grundkörpers 2 ist eine zweite Mehrzahl 3b von Schneiden 3 (d.h. eine zweite Gruppe von Schneiden) zum Erzeugen eines größeren zweiten Bohrungsdurchmessers vorgesehen.

Wie insbesondere in den Fig. 2 und Fig. 3 zu sehen ist, weist die konkret dargestellte Ausführungsform des Bohrwerkzeugs 1 ferner noch eine dritte Mehrzahl 3c von Schneiden 3 (d.h. eine dritte Gruppe von Schneiden) zum Erzeugen eines noch kleineren dritten Bohrungsdurchmessers auf. Die dritte Mehrzahl 3c von Schneiden ist dabei derart angeordnet, dass die Schneiden sowohl in axialer als auch in radialer Richtung von dem Grundkörper 2 hervorstehen. Die Gruppen von Schneiden, d.h. die erste Mehrzahl 3a von Schneiden 3, die zweite Mehrzahl 3b von Schneiden 3 und die dritte Mehrzahl 3c von Schneiden 3, weisen bei der Ausführungsform jeweils drei Schneiden 3 auf, die über den Umfang des Grundkörpers 2 verteilt angeordnet sind. Die Schneiden 3 jeder Gruppe sind dabei derart angeordnet, dass sie sich mit den anderen Schneiden 3 derselben Gruppe jeweils zumindest im Wesentlichen auf derselben radialen und axialen Position befinden, d.h. mit den anderen Schneiden derselben Gruppe in der radialen Richtung und in der axialen Richtung zumindest im Wesentlichen ausgerichtet sind.

Wie insbesondere in Fig. 4 dargestellt ist, sind die Schneiden 3 einer Gruppe dabei jeweils nicht in gleichmäßigen Winkelabständen über den Umfang des Grundkörpers 2 verteilt, sondern in ungleichmäßigen Winkelabständen über den Umfang des Grundkörpers 2 verteilt.

Z.B. ist eine erste Schneide 3 der zweiten Mehrzahl 3b von Schneiden in einem Winkelabstand α zu einer in Rotationsrichtung nachfolgenden zweiten Schneide 3 der zweiten Mehrzahl 3b angeordnet, die zweite Schneide ist in einem kleineren Winkelabstand (α-Δ₁) zu einer nachfolgenden dritten Schneide angeordnet und die dritte Schneide ist in einem größeren Winkelabstand (α+Δ₂) zu der nachfolgenden ersten Schneide angeordnet. Insbesondere gilt dabei Δ₁ > 0 und Δ₂ < 0. Bei dem in Fig. 4 dargestellten Sonderfall ist beispielsweise Δ₁ = Δ₂ = 4°, Δ₁ und Δ₂ können aber auch voneinander verschieden sein und auch andere Werte aufweisen. Bei der in Fig. 4 dargestellten Ausführungsform beträgt z.B. α = 120°, es ist aber auch ein anderer Wert für α möglich.

Ebenso ist eine erste Schneide 3 der ersten Mehrzahl 3a von Schneiden in einem Winkelabstand β zu einer in Rotationsrichtung nachfolgenden zweiten Schneide 3 der ersten Mehrzahl 3a von Schneiden angeordnet, die zweite Schneide in einem Winkelabstand (β-Δ₃) zu einer nachfolgenden dritten Schneide und die dritte Schneide in einem Winkelabstand (β+Δ₄) zu der nachfolgenden ersten Schneide, wobei gilt Δ₃ # 0 und Δ₄ ≠ 0. Bei der dargestellten bevorzugten Ausführungsform ist der Winkelabstand β gleich dem zuvor beschriebenen Winkelabstand α. Bei der Ausführungsform beträgt β insbesondere 120°, es sind jedoch auch andere Werte möglich. Auch bei der ersten Mehrzahl 3a von Schneiden ist bei der dargestellten Ausführungsform Δ₃ = Δ₄ und insbesondere können Δ₃ und Δ₄ den gleichen Wert wie Δ₁ und Δ₂ annehmen, z.B. 4° bei der dargestellten Ausführungsform. Bevorzugt gilt dabei zumindest α = β, Δ₁ = Δ₃ und Δ₂ = Δ₄.

Bei der dargestellten Ausführungsform sind ferner die Schneiden 3 der dritten Mehrzahl 3c von Schneiden mit denselben Winkelabständen und auf denselben Positionen in Umfangsrichtung wie die Schneiden 3 der ersten Mehrzahl 3a von Schneiden angeordnet. Wie insbesondere in Fig. 4 zu sehen ist, sind die Schneiden der zweiten Mehrzahl 3b von Schneiden (d.h. die Schneiden der zweiten Gruppe von Schneiden) gegenüber den Schneiden der ersten Mehrzahl 3a von Schneiden (d.h. der ersten Gruppe von Schneiden) bezüglich einer vorgegebenen Rotationsrichtung des Bohrwerkzeugs 2 in Umfangsrichtung nach rückwärts versetzt angeordnet. Bei der konkret dargestellten Ausführungsform sind die Schneiden der zweiten Gruppe von Schneiden jeweils um einen Winkel γ nach rückwärts gegenüber den Schneiden der ersten Gruppe von Schneiden versetzt. Bei der Ausführungsform beträgt der Winkel γ z.B. ca. 12°, es sind jedoch auch andere Winkel möglich. Bevorzugt liegt der Winkel γ jedoch in einem Winkelbereich von 3° bis 30°, mehr bevorzugt von 7° bis 20°.

Im Folgenden wird die Ausgestaltung der einzelnen Schneiden 3 unter Bezugnahme auf Fig. 3 eingehender beschrieben.

Wie in Fig. 3 zu sehen ist, sind bei dem Bohrwerkzeug 1 Schneidenbereiche 33 zum Ausbilden von parallel zu der Längsachse der Bohrung verlaufenden Bohrungswänden vorgesehen, wobei die Längsachse der zu fertigenden Bohrung mit der Längsachse L des Bohrwerkzeugs 1 übereinstimmt. Es sind ferner auch Schneidenbereiche 34 zum Ausbilden von schräg oder quer zu der Längsachse der Bohrung verlaufenden Bohrungswänden vorgesehen. Die Schneidenbereiche 34 zum Ausbilden von schräg oder quer verlaufenden Bohrungswänden erstrecken sich schräg bzw. quer zur Längsachse L des Bohrwerkzeugs, wohingegen sich die Schneidenbereiche 33 im Wesentlichen parallel zur Längsachse L erstrecken. Neben den zuvor beschriebenen im Wesentlichen gradlinig verlaufenden Schneidenbereichen können auch gekrümmte Schneidenbereiche zum Erzeugen von Verrundungen vorgesehen sein. Die verschiedenen Schneidenbereiche 33, 34 bilden dabei Teile von Schneidkanten, die zwischen einer Spanfläche (in Fig. 3 schraffiert dargestellt) und Seitenflächen der jeweiligen Schneiden 3 gebildet sind. Verschiedene Schneidenbereiche 33, 34 können dabei entlang einer gemeinsamen Schneidkante ausgebildet sein, d.h. die jeweiligen Schneiden können z.B. sowohl parallel verlaufende Schneidenbereiche 33 als auch schräg und/oder quer verlaufende Schneidenbereiche 34 aufweisen.

Wie ebenfalls insbesondere in Fig. 3 zu sehen ist, sind die Schneiden 3 aus Ultrahartwerkstoff ferner mit einer Spanleitstufe 37 versehen, die als Vertiefung in der Spanfläche der Schneide in dem Ultrahartwerkstoff ausgebildet ist. Die Spanleitstufe 37 ist dabei durch Laserbearbeitung oder Elektroerodieren durch Abtragen eines Teils des Ultrahartwerkstoffes in dem Ultrahartwerkstoff ausgebildet.

Das Bohrwerkzeug 1 ist ferner mit einer internen Kühlmittelversorgung versehen, die im Folgenden noch eingehender beschrieben wird. Der Begriff Kühlmittel wird in dem vorliegenden Kontext auch als Sammelbegriff für kombinierte Kühl- und Schmiermittel verwendet.

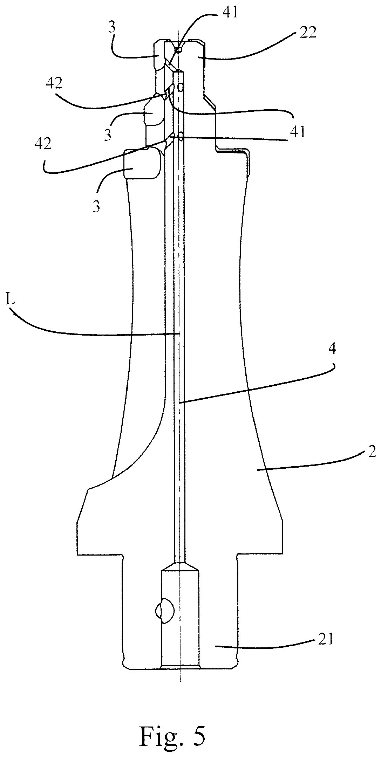

Wie in Fig. 5 zu sehen ist, weist das Bohrwerkzeug 1 einen Kühlmittelzufuhrkanal 4 auf, der sich von dem ersten Ende 21 des Grundkörpers 2 in der axialen Richtung in den Grundkörper 2 erstreckt. Anstelle eines solchen Kühlmittelzufuhrkanals können z.B. jedoch auch mehrere solche Kühlmittelzufuhrkanäle vorgesehen sein. Im Bereich der Sitze, an denen die Schneiden 3 an dem Grundkörper 2 befestigt sind, sind Querlöcher 41 ausgebildet, die den zentralen Kühlmittelzufuhrkanal 4 mit jeweiligen Kühlmittelaustritten 42 verbinden, die den jeweiligen Schneiden 3 zugeordnet sind. Obwohl bei der Ausführungsform für sämtliche Schneiden 3 separate Kühlmittelaustritte 42 vorgesehen sind, ist es z.B. auch möglich, dass für mehrere Schneiden 3 ein gemeinsamer Kühlmittelaustritt vorgesehen wird oder dass nicht für sämtliche Schneiden 3 Kühlmittelaustritte vorgesehen werden.

Bei dem Bohrwerkzeug 1 gemäß der Ausführungsform sind die Querlöcher 41 und die zugehörigen Kühlmittelaustritte 42 teilweise derart ausgebildet, dass das zugeführte Kühlmittel mit einer in Richtung des ersten Endes 21 gerichteten Strömungskomponente aus den Kühlmittelaustritten 42 austritt, um einen besonders guten Abtransport der erzeugten Späne in Richtung des ersten Endes 21 zu erzielen. Bei der konkret dargestellten Ausführungsform sind insbesondere die Kühlmittelaustritte 42 der ersten Mehrzahl 3a von Schneiden und die Kühlmittelaustritte der zweiten Mehrzahl 3b von Schneiden in dieser Weise ausgebildet, wohingegen die Kühlmittelaustritte 42, die der dritten Mehrzahl 3a von Schneiden zugeordnet sind, derart ausgebildet sind, dass das Kühlmittel mit einer Strömungskomponente in Richtung des zweiten Endes 22 des Grundkörpers 2 austritt. Die gerichtete Führung des Kühlmittels zu den jeweiligen Kühlmittelaustritten 42 wird über eine entsprechende Ausrichtung der jeweiligen zugeordneten Querlöcher 41 erreicht, wie insbesondere in Fig. 5 zu sehen ist.

Mit dem beschriebenen Bohrwerkzeug 1 wird eine besonders schnelle und vibrationsarme Zerspanung von langspanenden Werkstoffen ermöglicht, bei der die erzeugten Späne besonders zuverlässig geformt und abgeführt werden, ohne die zu erzeugende Werkstückoberfläche zu beschädigen.

### ABWANDLUNG

Obwohl lediglich eine Ausführungsform beschrieben wurde, bei der die einzelnen Gruppen von Schneiden 3 jeweils drei Schneiden aufweisen, ist es bei einer Abwandlung z.B. auch möglich, die Gruppen mit jeweils nur zwei Schneiden oder mit mehr als drei Schneiden zu realisieren und den Grundkörper 2 mit einer entsprechenden Anzahl von Spannuten zu versehen. Insbesondere bei einer Ausgestaltung mit zwei Schneiden pro Gruppe, d.h. einer Ausbildung als sogenannter 2-Schneider, kann zusätzlich bevorzugt auch am zweiten Ende 22 eine Zentrumsschneide vorgesehen werden, um ein Bohren in Vollmaterial zu ermöglichen. Auch in dem Fall von zwei Schneiden pro Gruppe oder von mehr als drei Schneiden pro Gruppe ist jedoch eine ungleichmäßige Verteilung der Schneiden über den Umfang des Grundkörpers 2 vorzusehen.

## Patentansprüche

1. Bohrwerkzeug (1) zum Erzeugen einer Bohrung in einem Werkstück, mit:
einem Grundkörper (2),
**gekennzeichnet durch**
zumindest eine erste Mehrzahl (3a) von Schneiden (3) aus Ultrahartwerkstoff, die zur Ausbildung eines vorgegebenen ersten Bohrungsdurchmessers über den Umfang des Grundkörpers (2) verteilt an zugeordneten Sitzen befestigt sind,
wobei die Schneiden (3) in ungleichmäßigen
Winkelabständen (β, β-Δ₃, β+Δ₄) über den Umfang des Bohrwerkzeugs (1) verteilt sind und jeweils zumindest eine Schneidkante und zumindest eine spanflächenseitig in den Ultrahartwerkstoff eingebrachte, als Vertiefung in dem Ultrahartwerkstoff ausgebildete Spanleitstufe (37) aufweisen.

2. Bohrwerkzeug nach Anspruch 1, wobei die Schneiden (3) aus Ultrahartwerkstoff stoffschlüssig an den zugeordneten Sitzen befestigt sind.

3. Bohrwerkzeug nach Anspruch 1 oder 2, wobei der Grundkörper (2) mit den Schneiden (3) zugeordneten Kühlmittelaustritten (42) versehen ist.

4. Bohrwerkzeug nach Anspruch 3, das ein erstes Ende (21) zum Verbinden mit einer Werkzeugaufnahme und ein freies zweites Ende (22) aufweist und wobei zumindest einer der Kühlmittelaustritte (42) derart ausgebildet ist, dass Kühlmittel mit einer in Richtung des ersten Endes (21) gerichteten Strömungskomponente aus dem Kühlmittelaustritt (42) austritt.

5. Bohrwerkzeug nach einem der vorangehenden Ansprüche, wobei die erste Mehrzahl (3a) von Schneiden (3) zumindest drei über den Umfang des Grundkörpers (2) verteilte Schneiden (3) aufweist.

6. Bohrwerkzeug nach einem der vorangehenden Ansprüche, wobei die Spanleitstufe (37) durch Laserbearbeitung oder Elektroerodieren in dem Ultrahartwerkstoff ausgebildet ist.

7. Bohrwerkzeug nach einem der vorangehenden Ansprüche, wobei sich die Spanleitstufe (37) jeweils überwiegend entlang der zugehörigen Schneidkante erstreckt und dem Verlauf der Schneidkante folgt.

8. Bohrwerkzeug nach einem der vorangehenden Ansprüche, wobei der Ultrahartwerkstoff PKD (polykristallinen Diamant) oder CBN (kubisches Bornitrid) aufweist.

9. Bohrwerkzeug nach einem der vorangehenden Ansprüche, wobei das Bohrwerkzeug (1) als Stufenbohrer mit mehreren Gruppen von Schneiden (3a, 3b, 3c) zum Erzeugen verschiedener Bohrungsdurchmesser ausgebildet ist, die an voneinander verschiedenen axialen Positionen entlang einer Längsachse (L) des Grundkörpers (2) angeordnet sind.

10. Bohrwerkzeug nach einem der vorangehenden Ansprüche, wobei das Bohrwerkzeug zumindest eine erste Mehrzahl (3a) von Schneiden (3) zur Ausbildung eines ersten Bohrungsdurchmessers und zumindest eine zweite Mehrzahl (3b) von Schneiden (3) zur Ausbildung eines größeren, zweiten Bohrungsdurchmessers aufweist.

11. Bohrwerkzeug nach einem der vorangehenden Ansprüche, wobei die erste Mehrzahl (3a) von Schneiden und die zweite Mehrzahl (3b) von Schneiden jeweils zumindest drei Schneiden (3) aufweisen.

12. Bohrwerkzeug nach Anspruch 10 oder 11, wobei die Schneiden (3) der zweiten Mehrzahl (3b) von Schneiden gegenüber den Schneiden (3) der ersten Mehrzahl (3a) von Schneiden bezüglich einer Rotationsrichtung in Umfangsrichtung nach rückwärts versetzt angeordnet sind.

13. Bohrwerkzeug nach Anspruch 12, wobei die Schneiden (3) der zweiten Mehrzahl (3b) von Schneiden jeweils um einen Winkel (γ) im Bereich 3°-30° zu den Schneiden (3) der ersten Mehrzahl (3a) von Schneiden versetzt angeordnet sind, bevorzugt im Bereich 7°-20°.

14. Bohrwerkzeug nach einem der vorangehenden Ansprüche, wobei das Bohrwerkzeug (1) Schneidenbereiche (33) zum Ausbilden von parallel zu einer Längsachse der Bohrung verlaufenden Bohrungswänden und Schneidenbereiche (34) zum Ausbilden von schräg oder quer zu der Längsachse der Bohrung verlaufenden Bohrungswänden aufweist.

15. Bohrwerkzeug nach einem der vorangehenden Ansprüche, wobei das Bohrwerkzeug zum Bohren ins Volle ausgebildet ist und zumindest eine sich zumindest bis zur Längsachse (L) erstreckende Stirnschneide aufweist.

## Claims

1. A drilling tool (1) for generating a bore in a work-piece, having:
a base body (2),
**characterized by** at least a first plurality (3a) of cutters (3) from ultra-hard material which are mounted to allocated seats and distributed over the circumference of the base body (2) for forming a predetermined first bore diameter,
wherein the cutters (3) are distributed over the circumference of the drilling tool (1) in unregular angular distances (β, β-Δ₃, β+Δ₄) and each comprise at least one cutting edge and at least one chip conducting structure (37) formed into the ultra-hard material at a rake face side and formed as recess in the ultra-hard material.

2. The drilling tool according to claim 1, wherein the cutters (3) from ultra-hard material are mounted to the allocated seats by material connection.

3. The drilling tool according to claim 1 or 2, wherein the base body (2) is provided with coolant outlets (42) allocated to the cutters (3).

4. The drilling tool according to claim 3, comprising a first end (21) for connection to a tool receiving porting and a free second end (22) and wherein at least one of the coolant outlets (42) is formed such that coolant exits from the coolant outlet (42) with a flow component directed toward the first end (21).

5. The drilling tool according to any one of the preceding claims, wherein the first plurality (3a) of cutters (3) comprises at least three cutters (3) distributed over the circumference of the base body (2).

6. The drilling tool according to any one of the preceding claims, wherein the chip conducting structure (37) is formed in the ultra-hard material by laser processing or electric discharge machining.

7. The drilling tool according to any one of the preceding claims, wherein the chip conducting structure (37) in each case extends predominantly along the allocated cutting edge and follows the course of the cutting edge.

8. The drilling tool according to any one of the preceding claims, wherein the ultra-hard material comprises PCD (polycrystalline diamond) or CBN (cubic boron nitride).

9. The drilling tool according to any one of the preceding claims, wherein the drilling tool (1) is formed as a step drill with plural groups of cutters (3a, 3b, 3c) for generating different bore diameters, which groups are arranged at different axial positions along a longitudinal axis (L) of the base body (2).

10. The drilling tool according to any one of the preceding claims, wherein the drilling tool comprises at least a first plurality (3a) of cutters (3) for forming a first bore diameter and at least a second plurality (3b) of cutters (3) for forming a larger second bore diameter.

11. The drilling tool according to any one of the preceding claims, wherein the first plurality (3a) of cutters and the second plurality (3b) of cutters each comprise at least three cutters (3).

12. The drilling tool according to claim 10 or 11, wherein the cutters (3) of the second plurality (3b) of cutters are arranged offset backward in the circumferential direction with respect to a rotational direction as compared to the cutters (3) of the first plurality (3a) of cutters.

13. The drilling tool according to claim 12, wherein the cutters (3) of the second plurality (3b) of cutters are each arranged offset by an angle (γ) in the range 3°-30° from the cutters (3) of the first plurality (3a) of cutters, preferably in the range 7°-20°.

14. The drilling tool according to any one of the preceding claims, wherein the drilling tool (1) comprises cutter regions (33) for forming bore walls extending parallel to a longitudinal axis of the bore and cutter regions (34) for forming bore walls extending oblique or transverse to the longitudinal axis of the bore.

15. The drilling tool according to any one of the preceding claims, wherein the drilling tool is formed for drilling into solid material and comprises at least one face cutter extending at least up to the longitudinal axis.

## Revendications

1. Outil de perçage (1) pour produire un perçage dans une pièce, avec un corps de base (2), **caractérisé par** au moins une première pluralité (3a) de lames (3) en matériau ultradur, qui sont fixées sur des sièges associés de façon répartie sur la périphérie du corps de base (2) afin de former un premier diamètre de perçage prédéterminé,
dans lequel les lames (3) sont réparties à des distances angulaires irrégulières (β, β-Δ₃, β+Δ₄) sur la périphérie de l'outil de perçage (1) et présentent respectivement au moins une arête de coupe et au moins un étage de guidage de copeaux (37) pratiqué du côté de la face de coupe dans le matériau ultradur et réalisé sous forme de creux dans le matériau ultradur.

2. Outil de perçage selon la revendication 1, dans lequel les lames (3) en matériau ultradur sont fixées matériellement aux sièges associés.

3. Outil de perçage selon une revendication 1 ou 2, dans lequel le corps de base (2) est muni de sorties d'agent réfrigérant (42) associées aux lames (3).

4. Outil de perçage selon la revendication 3, qui présente une première extrémité (21) pour l'assemblage à un logement d'outil et une deuxième extrémité libre (22) et dans lequel au moins une des sorties d'agent réfrigérant (42) est réalisée de telle manière que l'agent réfrigérant sorte de la sortie d'agent réfrigérant (42) avec une composante d'écoulement orientée en direction de la première extrémité (21).

5. Outil de perçage selon l'une quelconque des revendications précédentes, dans lequel la première pluralité (3a) de lames (3) présente au moins trois lames (3) réparties sur la périphérie du corps de base (2).

6. Outil de perçage selon l'une quelconque des revendications précédentes, dans lequel l'étage de guidage de copeaux (37) est formé par usinage au laser ou par électroérosion dans le matériau ultradur.

7. Outil de perçage selon l'une quelconque des revendications précédentes, dans lequel l'étage de guidage de copeaux (37) s'étend respectivement principalement le long de l'arête de coupe correspondante et suit le tracé de l'arête de coupe.

8. Outil de perçage selon l'une quelconque des revendications précédentes, dans lequel le matériau ultradur présente du PKD (diamant polycristallin) ou du CBN (nitrure de bore cubique).

9. Outil de perçage selon l'une quelconque des revendications précédentes, dans lequel l'outil de perçage (1) est réalisé sous la forme d'un foret étagé avec plusieurs groupes de lames (3a, 3b, 3c) permettant de produire différents diamètres de perçage, qui sont disposés à des positions axiales différentes l'un de l'autre le long d'un axe longitudinal (L) du corps de base (2).

10. Outil de perçage selon l'une quelconque des revendications précédentes, dans lequel l'outil de perçage présente au moins une première pluralité (3a) de lames (3) permettant de réaliser un premier diamètre de perçage et au moins une seconde pluralité (3b) de lames (3) permettant de réaliser un second diamètre de perçage plus grand.

11. Outil de perçage selon l'une quelconque des revendications précédentes, dans lequel la première pluralité (3a) de lames et la seconde pluralité (3b) de lames présentent chacune au moins trois lames (3).

12. Outil de perçage selon une revendication 10 ou 11, dans lequel les lames (3) de la seconde pluralité (3b) de lames sont disposées avec un décalage vers l'arrière en direction périphérique par rapport aux lames (3) de la première pluralité (3a) de lames par rapport à un sens de rotation.

13. Outil de perçage selon la revendication 12, dans lequel les lames (3) de la seconde pluralité (3b) de lames sont disposées respectivement avec un décalage d'un angle (γ) dans la plage de 3°-30° par rapport aux lames (3) de la première pluralité (3a) de lames, de préférence dans la plage de 7°-20°.

14. Outil de perçage selon l'une quelconque des revendications précédentes, dans lequel l'outil de perçage (1) présente des zones de coupe (33) permettant de former des parois de perçage s'étendant parallèlement à un axe longitudinal du perçage et des zones de coupe (34) permettant de former des parois de perçage s'étendant en oblique ou transversalement à l'axe longitudinal du perçage.

15. Outil de perçage selon l'une quelconque des revendications précédentes, dans lequel l'outil de perçage est conçu pour le perçage dans la masse et présente au moins une lame frontale s'étendant au moins jusqu'à l'axe longitudinal (L).
